# EUROPÄISCHE PATENTSCHRIFT

(11) **EP 2 353 689 B1**
(45) Veröffentlichungstag und Bekanntmachung des Hinweises auf die Patenterteilung: **16.04.2014**
(21) Anmeldenummer: 11000453.8
(22) Anmeldetag: 20.01.2011
(51) Int. Cl.: B01D 24/04, B01D 24/46, C02F 1/00

(54) **Flachdüsenboden-Druckfilter für Wasserbehandlungs- und Aufbereitungsanlagen**
Flat nozzle pressure filter for water treatment and processing facilities
Filtre à pression pour fond de buses plates pour les installations de préparation et de traitement de l'eau

(30) Priorität: 05.02.2010 DE 202010001973 U
(43) Veröffentlichungstag der Anmeldung: 10.08.2011
(73) Patentinhaber: Bräutigam Kunststoffsysteme GmbH, 07987 Mohlsdorf (DE)
(72) Erfinder: Bräutigam, Roland, 08412 Werdau (DE)
(74) Vertreter: Schneider, Andreas

(56) Entgegenhaltungen:
- DE-A1- 10 258 414
- DE-C- 805 038
- GB-A- 2 232 092
- US-A- 4 260 426
- US-A- 5 114 595
- US-A- 5 350 505
- US-A- 6 048 456

## Beschreibung

Die Erfindung betrifft einen Flachdüsenboden-Druckfilter für das Filtrieren von Schwebstoffen aus Wasser in Wasserbehandlungs- und Aufbereitungsanlagen von Pools, Schwimmbädern, Freibädern, Hallenbädern, Schwimm- und Gartenteichen, Aquarien, Regenwasser, Trinkwasser, Abwasser und ähnlichen flüssigen Medien.

Verbreitet und dem Stand der Technik entsprechend werden für die Wasseraufbereitung- und Behandlung Filteranlagen mit Filtermaterialfüllungen aus Kies, Sand, *AFM (aktiviertes Filtermaterial ) oder NFM ( neutrales Filtermaterial )* anderen Materialien verwendet. Die Filter dienen dem Zurückhalten und Ausfiltrieren von Schwebstoffen aus dem Wasser und werden in unterschiedlichsten Bauarten sowie Größe eingesetzt.
Der jeweils eingesetzte Filtertyp ist abhängig von der Wasserart und den anfallenden zu filternden Stoffen.
Allen Filteranlagen liegt ein ähnliches Wirkprinzip vor. Die Filter werden mit dem zu filternden Wasser durchflutet. Das Filtermaterial hält bzw. filtert Schmutz, Schwebstoffe, Haare, Kleinteilchen und andere im Wasser befindliche Inhaltsstoffe während dem Durchlauf durch den Filter aus, indem diese Teilchen in den Filtermaterial-Lücken gesammelt werden. Der Abfluss des Wassers aus dem Filter wird durch den Einsatz von so genannten Filterdüsen gewährleistet, die meist mit Schlitzen unterschiedlicher Schlitzweite versehen sind und nur das Wasser an sich, sowie Teilchen kleiner der Schlitzweite aus dem Filter abfließen lassen. Somit werden das Filtermaterial selbst und die Filtrationsstoffe im Filter zurückgehalten. Jeder Filter, egal mit welchem eingesetzten Filtermaterial ist irgendwann so mit Filtrationsstoffen im Filtermaterial gesättigt, dass kaum noch oder nur sehr geringe Mengen Wasser den Filter durchlaufen können. Man spricht gebräuchlich dann von einem zugesetzten Filter oder sagt einfach, der Filter ist zu, oder voll gesättigt.
Bei herkömmlich eingesetzten Filtern wie Kies/ Sandfiltern ist zu verzeichnen, dass sich in den Filtermaterialien an den einzelnen Körnern des Filtermaterials selbst Bakterienfilme bilden, die nur sehr schwer zu lösen sind und selbst bei sehr starken Rückspülkräften kaum oder nur teilweise Aufgelöst werden können. Diese Bakterienfilme führen dazu, dass die einzelnen Filtermaterialkürner auf Grund der gebildeten Bakterienschichten zusammen wachsen und einen relativ festen Verbund bilden. Mit zunehmender Wassertemperatur wird dieser Prozess um ein Vielfaches beschleunigt.
Der so entstandene Verbund der einzelnen Filtermaterialkömer lässt den Filter regelrecht zuwachsen und vermindert so die Filtrationswirkung erheblich. Zudem ist die entstandene Bakterienkultur ein erheblicher Infektionsherd. Wird beim Rückspülen eines Filters nicht das gesamte Filtermaterial restlos gesäubert und alles an Schmutz ausgetragen, wiederholt sich der Prozess des Zuwachsens des Filters mit jedem erneuten Filtervorgang schneller. Der Filter wird so mit der Zeit ineffektiv, die Filtermaterialfüllung muss dann ausgetauscht werden.

In der DE 102 58 414 A1 wird hierzu ein Schlitzbodenkonstruktion für den Einsatz als Filterboden und zur Erzeugung eines Wirbelbettes im Festbett eines Filters mittels Fluidzuführung. dazu weise der Schlitzboden kreisförmig und konzentrisch angeordnete Schlitze auf, so dass das Fluid in geeigneter und gleichmäßig verteilter Weise unter das Festbett geführt wird. Diese Maßnahme allein reicht jedoch nicht aus, um eine gleichmäßige Verteilung der Fluids zur Erzeugung eines homogenen Wirbelbettes zu erzeugen. Um einen gleichmäßigen Druck durch das Schlitzblech auf das Festbett mittels Fluidzufuhr zu übertragen, kommt es vor allem auf die Art und Weise der Fluidzufuhr an. Diese ist in dieser technischen Lösung nichtdefiniert. Die kreisförmige konzentrische Anordnung der Schlitze führt nicht ohne weitere Maßnahmen zu einer gleichmäßigen Aufwirbelung des Filterfestbettes.

Die US 6 048 456 A bezieht sich unter anderem auch auf eine Wasserbehandlungsvorrichtung. Diese besteht auch aus einem rohrförmigen Gehäuse mit jeweils an den offenen Enden angeordneten Sieben und Endkappen mit den Zuführ- und Abführarmaturen. Diese Wasserbehandlungsvorrichtung arbeitet nicht kontinuierlich, sondern muß nach erfolgter Aufbereitung des Wassers gelehrt werden. Dazu sind die vorgesehen Öffnung zu öffnen und nach erfolgter Neubeschickung wieder zu verschließen. Es handelt sich bei der Art der Wasseraufbereitung nicht um eine Schwebstoffiltration sondern um eine Stofffiltration wobei keine freie Rückspülung des Filtermaterials möglich ist.

US 5 114 595 A weist ebenfalls ein Filtersystem auf mit einem rohrförmigen Behälter, welcher im unteren und im oberen Bereich eine Siebanordnung aufweist.
Das obere Sieb dient beim Rückspülprozess dem Rückhalten des Filtermaterials, welches in der vorliegenden Erfindung aus natürlichen Produkten, wie zerkleinerten Nussschalen, besteht. Dieses Material dient der Anbindung und damit der Entfernung von Ölen, welche in dem zu reinigenden Wasser enthalten sind und durch den Filterprozess entfernt werden sollen. Beim Rückspülen soll das Wasser mit dem Filtermaterial in eine kreisförmige Bewegung gebracht werden, um das Filtermaterial gut reinigen zu können. Dazu wird zusätzliches Reinigungswasser im unteren Bereich des rohrförmigen Filterbehälters peripher und mit Druck in den Filter eingetragen. Da jedoch im oberen Bereich ebenfalls ein Sieb angeordnet ist, welches dazu dient, das Filtermaterial zurück zu halten, kommt es regelmäßig zum Zusetzen dieses Siebes und damit zur unzureichenden Reinigung des Filtermaterials. Dazu kommt die stoffliche Anreicherung an das Filtermaterial, was dazu führt, dass das Filtermaterialbett von Zeit zu Zeit ausgetauscht werden muss.

In der US 4 260 426 A wird eine Filtervorrichtung offenbart bei der in einem Filterbehälter unterhalb des Einlasses eine Trennscheibe 12 angeordnet ist. Weiterhin ist wenigstens eine perforierte Trennscheibe 15 zur Trennung der verschiedenen Filtermedienschichten 14, 16 vertikal gleitend durch an der Innenseite des Gehäuses 10 angeordnete Halterungen 19 mit dazugehöriger Führung 20 angeordnet. Diese perforierte Trennscheibe 15 trennt somit einerseits die eingesetzten Filtermedien in der Korngrößenverteilung aber und auch in ihrer unterschiedlichen Beschaffenheit, beispielsweise ihrer Dichte. Sie ermöglicht jedoch auch eine Expansion des darunter liegenden Filter-Medienbettes während des Rückspül-Reinigungsvorgangs. Im unteren Teil ist ein perforierter Senkboden 17 für das untere Filtermedium angeordnet, durch den das gefilterte flüssige Medium zum Auslass 18 gelangt.

Der Vorteil liegt in einer mehrstufigen Filterung des flüssigen Mediums. Diese Lösung bietet jedoch keine ausreichende Möglichkeit für eine effektive Rückspülung und damit Reinigung des mit den heraus gefilterten Materialien belasteten Filtermaterials, da durch die Anordnung der Trennscheiben 12 und 15 das Auflockern des Filtermaterialbettes erschwert und behindert und das Heraustragen des heraus gefilterten Materials aus dem Filter behindert wird. Die verschiedenen Filtermaterialebenen werden sich nach einiger Zeit mit Verunreinigungen zusetzen und ein manueller Austausch des Filtermaterials wird notwendig.

Da die meisten bekannten Filter jedoch Filtermaterialschüttungen zwischen 20 Kg und 150 Kg bis hin zu 15 - 25 t haben, ist der Austausch des Filtermaterials mit sehr viel Aufwand und Kosten verbunden.
Filteranlagen werden mit unterschiedlichen Betriebsdrücken betrieben, die über wiederum unterschiedliche Druck-Anzeigesysteme überwacht werden können. Der angezeigte Druck im Filter lässt dabei Rückschlüsse über den Betriebszustand eines Filters erfahren. In allen Filtern zeigt ein erhöhter Betriebsdruck einen erhöhten Zusetzungsgrad des Filters an.
Wird ein bestimmter Wert erreicht, muss der Filter spätestens dann gereinigt bzw. rückgespült werden.
Das Rückspülen eines verkrusteten Filters ist dann meistens nur noch mit sehr großen Wasserdrücken oder nur noch unter Zuwirkung von Druckluft als Luft-Wassergemisch, bei sehr zugesetzten Filtern oft nur mit zusätzlichem Chlorschock möglich. Wobei die bereits auf den Filtermaterialkörnern gebildeten Bakterienfilme nicht völlig mit abgetragen werden können. Sie bleiben vorhanden und führen dazu, dass nach jedem Rückspülvorgang der Prozess des wiederholten Bakterienwachstums noch schneller beginnen kann.
So entstehen im Filter selbst immer wieder anerobe Zonen mit aneroben Bakterien, die sich sehr negativ auf die Wasserqualität auswirken und auch eine Gefahr für den Nutzer des Wassers darstellen. Dies ist vor allem in Pool- und Schwimmbadanlagen, die mit Chlor desinfiziert werden, da sich Trichloramin bilden kann.
Für die Verhinderung des Zusetzens eines Filters wurden 2 neue Filtermaterialien auf den Markt gebracht, die durch ihre Eigenschaften gegenüber herkömmlich bekanntem Filterkies- oder Sand eine wesentliche Verbesserung der Filtrationswirkung erzielen lassen. Diese neu entwickelten Fitermedien sind AFM ( aktiviertes Filtermaterial ) und NFM ( neutrales Filtermaterial ). Beide Filtermedien kommen, wie auch alle herkömmlich bekannten Filtermaterialien in unterschiedlichen Fraktionen ( Korngrößen ) zum Einsatz.
Um die einzelnen Filtermaterialkörner während dem Filter- und Rückspülvorgang im Filter zurück zu halten und nur das anfallende Wasser und den Schmutz oder das entsprechende Filtrat in den Filter eintreten und nur das gefilterte Wasser beim Filtern, sowie nur das Filtrat wieder aus dem Filter beim Rückspülen austreten zu lassen ist es notwendig entsprechende Düsen im Filter einzubauen, die das Filtermaterial selbst nicht aus dem Filter austreten lassen und es zurückhalten.
Diese Düsen werden in unterschiedlichen Bauarten und Anordnungen in Filtern eingesetzt. Man spricht gebräuchlicher Weise von so genannten Schlitzdüsenkörpem mit, zu der entsprechenden Größe des kleinsten Filtermaterialkornes ausgewählten Schlitzweiten.
Die auf dem Markt befindlichen, dem bisherigen Stand der Technik entsprechenden Filterdüsen sind zum größten Teil als zylindrische oder kegelförmige Schlitzdüsenkörper erhältlich und werden in den Filtern stehend, liegend oder frei im Raum angeordnet eingebaut. Auf Grund der eingesetzten Schlitzdüsen verringert sich natürlich die freie, zur Verfügung stehende Querschnittsfläche eines Filtergehäuses.

Der benötigte Filterquerschnitt wird entsprechend der freien Querschnittsflächen der einzelnen Filterdüsen und deren Anordnung sowie der Anzahl und der geschlossenen Fläche zwischen den Düsenplätzen im Filterboden bestimmt.
Je nach gewählter Bauform und Anordnung der Schlitzdüsen ist die jeweilige Strömungsrichtung des Wassers bestimmt, dass in den Filter ein- und austritt und mit der das Filtermaterial durchströmt wird.

Die Verteilung des Einströmwassers beim Filterprozess über der Filtermaterialschüttung ist in den gebräuchlichsten Filtertypen bereits sehr gut gelöst, dies ist auch das kleinste technisch zu lösende Problem beim Aufbau eines Filters.
Das schwierigere am Filteraufbau ist die Wasser- und Druckverteilung für den Rückspülprozess. Dabei sollen unter möglichst sehr guter Wasserverteilung und genügendem Druck besten Falls alle Filtermaterialbereiche gleichmäßig durchströmt, durchspült und so gelockert werden, dass das gesamte Filterbett leicht angehoben, sehr gut durchmischt und der im Filtermaterial eingelagerte Schmutz bzw. das Filtrat restlos aus dem Filter ausgetragen wird.
Die Verteilung des Einströmwassers beim Filterprozess über der Filtermaterialschüttung ist in den gebräuchlichsten Filtertypen bereits sehr gut gelöst, dies ist auch das kleinste technisch zu lösende Problem beim Aufbau eines Filters. Jedoch sind die Lösungen für das Rückspülen alle nicht geeignet, eine umfangreiche Reinigung des gesamten Filtermaterials zu erreichen. Am besten wird diese Aufgabe in Filterbauarten mit so genannten Düsenböden realisiert. Dabei wird ein im Filter eingebauter horizontaler Boden mit senkrecht stehenden zylinder- oder kegelförmigen Schlitzdüsen bestückt. Die Aufteilung der Düsen ist wiederum von den Rahmenbedingungen eines Filters und dem Filtermaterial abhängig. Trotz bestmöglicher Aufteilung der Düsen auf dem Filterboden ist zwischen den einzelnen Düsen noch ungeschlitzte Fläche vorhanden, die ein Durchströmen des Filtermaterials eben über diesen Flächen unmöglich macht. Zwar ist ein Filterboden mit Filterdüsen im Filter schon gegenüber den sternförmig oder anders angeordneten Filterlanzen anderer Filterbauformen erheblich effizienter, trotzdem ist eine absolut gleichmäßige und restlose Durchströmung des Filtermaterials technisch nicht vollständig realisierbar.
Auf Grund der eingesetzten einzelnen Schlitzdüsen, egal welcher Bauform und Anordnung wird in der Summe aller Einflussfaktoren letztendlich die Dimension eines Filters bestimmt. Daher sind ausschließlich alle Kies- Sand- und andere Kornfilter in den Einsatzgebieten der Wasserbehandlung und Wasseraufbereitung mindestens 400 mm im Durchmesser und 500 mm hoch. Das Füllvolumen mit Filtermedium beginnt bei ca. 20 kg und ist nach oben offen. Um einen Filter wie bisher bekannt effektiv einzusetzen wurde gebräuchlich nach der Regel gearbeitet. Filterbetrieb ca. mit halber bis ¾ - telster Strömungsgeschwindigkeit gegenüber dem Rückspülprozess. Weiter wurde bisher auch durch renommierte Filterhersteller empfohlen, hohe Filterschichten mit abgestuften Filterkorngrößen zu verwenden, um möglichst gute bis sehr gute Filtrationsergebnisse und Wasserverteilung zu erzielen. Dabei wird in der Regel der Aufbau der Filtermaterialschichten mit einem Grobkorn über den Düsen begonnen und in Richtung nach oben hin mit jeweils kleiner werdenden Korngrößen gearbeitet. Daher sind in der Regel Filter sehr hoch gebaut.
Mit dem Einsatz von Filterschichten zwischen 200 mm und weit darüber hinaus ansteigend, auf Querschnittsflächen von 0,1 bis 3 und mehr m² verteilt werden natürlich mit steigender Filtermaterialschüttung vor allem beim Rückspülprozess erheblich steigende Wassermengen- und Drücke benötigt, um das Filtermaterial bestmöglichst zu durchmischen und aufzulockern und letztendlich das Filtrat aus dem Filter auszutragen.
Die Folge von ungünstigen Düsenverhältnissen- und Verteilungen im Filter, sehr hohen Schüttungen mit Filtermaterial und großen Filterdurchmessern ist die Notwendigkeit des Einsatzes sehr leistungsfähiger Pumpen mit hohem Energiebedarf für den gesamten Filterbetrieb und sehr großer Wassermengen beim Rückspülen der Filter, sowie Zusatzenergie in Form von Druckluft und gegebenenfalls Bakterien lösende Chemikalien.

Dies hat wiederum zur Folge, dass neben den steigenden Betriebskosten, verbunden mit dem Einsatz von Hilfsstoffen für die Wasser- und Abwasseraufbereitung, einem hohen Energiebedarf für den Betrieb von Filteranlagen, enormer Wasserverbrauch für das Rückspülen sowie ein hoher Aufwand für die Wartung von Filtern zu enormen Kosten solcher Anlagen beitragen.

Der Erfindung liegt deshalb die Aufgabe zu Grunde eine technische Lösung zu schaffen, mit deren Hilfe die Mängel des bekannten Standes der Technik überwunden werden können. Insbesondere soll eine einfache, kostengünstige und praxisnahe Lösung zum Verteilen des Rückspülwassers, dem Verringern der Baugrößen, dem Verringern von Filtermaterialschütthöhen und der Optimierung des Reinigungsgrades von Filtermedien unter Verringerung des Rückspülwasserbedarfes in Filtern, sowie eine Minimierung des Wartungsaufwandes von Filtern realisiert werden.

### Beschreibung

Erfindungsgemäß wird die Aufgabe im Wesentlichen durch die kennzeichnenden Merkmale des Anspruches 1 gelöst. Die vorteilhaften Ausgestaltungen sind in den Unteransprüchen beschrieben.

Danach wurde ein flacher Filterdüsenboden entwickelt, der horizontal im Filterunterteil eingebaut ist, in dem über den gesamten Filterquerschnitt düsenförmige Öffnungen angeordnet sind, die eine vertikale Strömungsrichtung des Rückspülwassers in Richtung des Filtermaterials realisieren. Die Summe der düsenförmigen Öffnungen dem freien Anschlussrohr-Querschnitt des Filters entspricht und der Zwischenraum zwischen den einzelnen düsenförmigen Öffnungen so klein bemessen ist, dass alle Bereiche des Filtermaterials beim Rückspülen des Filters gleichmäßig durchmischt und aufgewirbelt werden können. Die Gesamtquerschnittsfläche des flachen Filterdüsenbodens entspricht maximal dem 25 fachen der freien Querschnittsfläche des Anschlussrohrleitungsdurchmessers am Filter. Die Stärke bzw. Höhe des Flachdüsenbodens beträgt nur zwischen 0.01 -10 mm.

Die düsenförmigen Öffnungen des flachen Filterdüsenbodens sind so bemessen, dass das kleinste Filtermaterialkorn des Filtermaterials nicht während des Filtervorganges aus dem Filter ausgetragen werden kann.

Der vollflächig geschlitzte Flachdüsenboden wird vom Filterunterteil aus mit einem speziellen Verteilersystem so mit Wasser angeströmt, dass alle düsenförmigen Öffnungen gleichmäßig mit Rückspülwasser vertikal durchflutet werden.

Im oberen Teil des Filtergehäuses ist für die gleichmäßige Verteilung des Einströmwassers vertikal in den Filter ebenfalls ein horizontal liegendes geeignetes Verteilersystem angeordnet, welches gewährleistet, dass das Filterwasser gleichmäßig vertikal durch das Filtermaterial geleitet wird, ohne dass es zu Aufwirbelungen des Filtermaterials kommt und dass das Ausströmen des Rückspülwassers zum Auslass-Stutzen hin geleitet wird.

Die geometrische Ausführung der Verteilerplatte des Wasserverteilersystems im Filterober-und -unterteil ist so gestaltet, dass die Anschlüsse des Filters horizontal als auch vertikal angeordnet sein können und in jedem Fall eine optimale vertikale Strömungsrichtung des Einström- und Austrittswassers gewährleistet ist. Sie weist dazu eine gleichbleibenden Plattenstärke, in ihrer flächigen Ausbildung Verjüngungen und Durchbrüche unterschiedlicher Größe und auch Form auf und ist unmittelbar oberhalb des Wassereinlasses und unterhalb des Filterdüsenbodens im Filterunterteil und im Filteroberteil unmittelbar unter dem Wassereinlass in ihrer flächigen Ausbildung horizontal angeordnet.

Die Abstützungselemente des flachen Filterdüsenbodens sind so nach unten und, oder oben im Filterbehälter angeordnet, dass sie keine strömungstechnische Störquelle ergeben.

Die Filtermaterialschütthöhe im Filter entspricht maximal 40 % der freien Zylinderhöhe des Filterraumes zwischen dem flachen Filterdüsenboden und dem oberen Filteranschlussstutzen. Der Filter besteht aus 3 leicht montier- und demontierbaren Hauptbauteilen, die das Filtergehäuse ergeben. Einem Filterunterteil, einem Filtermantel und einem Filteroberteil, die mit entsprechenden Verbindungs- und Dichtungselementen druckfest und dicht zusammengefügt werden.

Der Filtermantel, besteht aus einem druckfesten transparenten Glas- oder Kunststoffrohr, welches der guten Beobachtung des Filterinhaltes dient.

Das Filterunter- und Oberteil, der flache Filterdüsenboden sowie die Wasserverteilerelemente sind aus druckfestem, gegenüber chemischen Wasserzusatzstoffen resistentem Material gefertigt.

Die Erfindung soll nachstehend an einem Ausführungsbeispiel näher erläutert werden. In der beigefügten Zeichnung zeigen:
- Fig. 1: eine schematische Parallelansicht eines Flachdüsenboden-Druckfilters;
- Fig. 2: eine schematische Seitenansicht eines Flachdüsenboden-Druckfilters und
- Fig. 3: eine schematische Ansicht einer Verteilerplatte 9.

### Ausführungsbeispiel

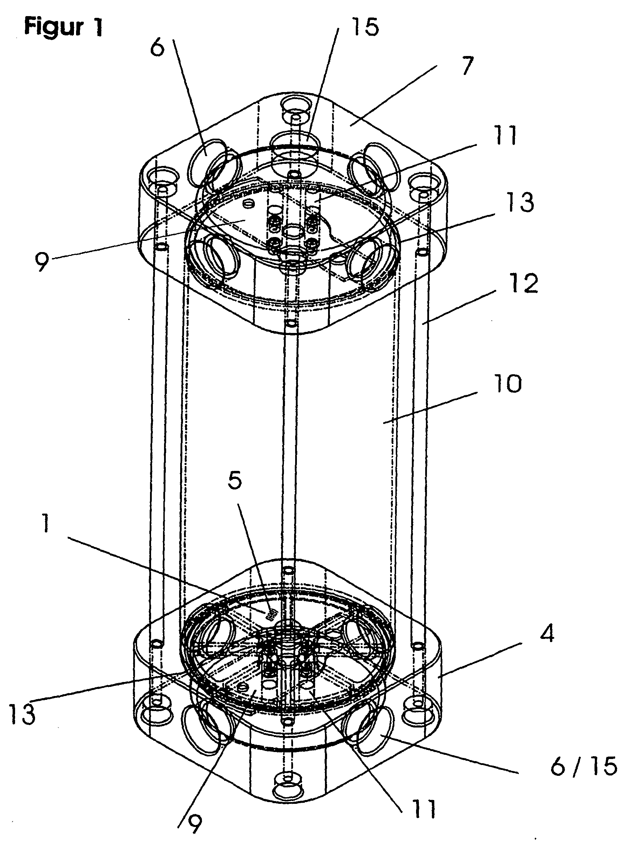

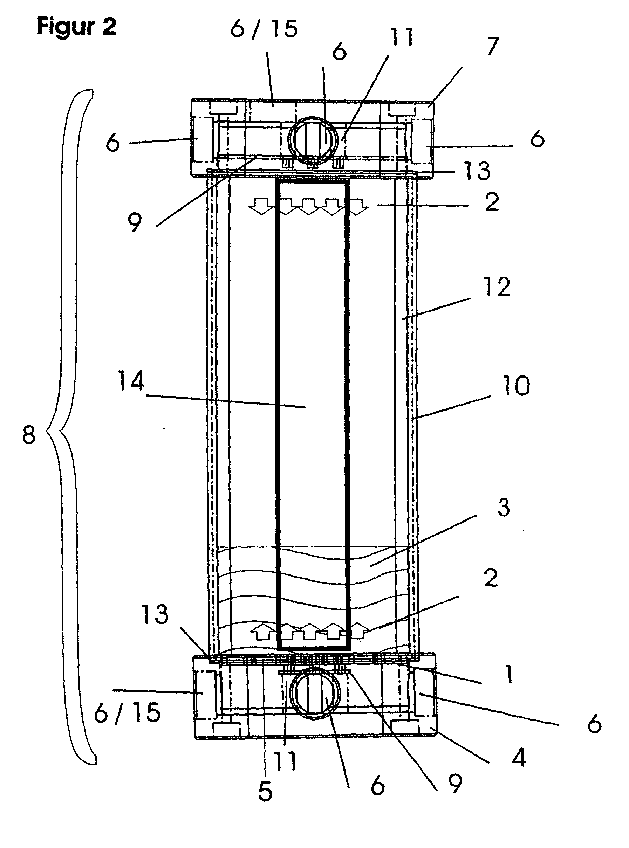

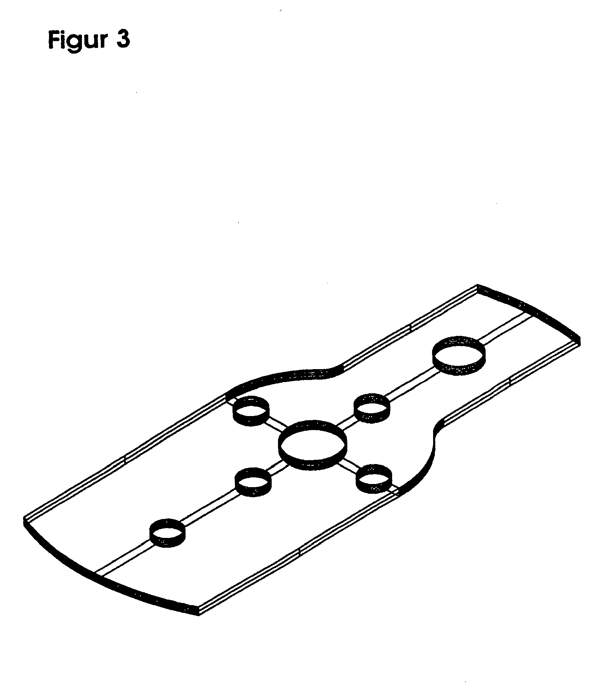

Gemäß der Figuren 1 bis 3 besteht ein erfindungsgemäßer Flachdüsenboden-Druckfilter für Wasserbehandlungs- und Aufbereitungsanlagen aus einem Filterunterteil 4, einem Filteroberteil und einem dazwischen angeordnetem Filterbehälter, einem Filterboden mit dort angeordneten Filterdüsen, Filtermaterial und Zu- und Abläufen für das zu reinigende und das gereinigte Wasser. Erfindungsgemäß ist im Filterbehälterunterteil 4 horizontal über den gesamten Filterquerschnitt ein Filterdüsenboden 1 angeordnet, wobei dieser Filterdüsenboden 1 als ebenes Schlitzblech ausgebildet ist. Die Schlitze im Schlitzblech weisen eine das vertikale Durchströmen des Wassers realisierende Schlitzöffnungsausbildung auf. Unterhalb dieses Filterdüsenbodens 1 ist ein für die Zuführung des Rückspülwassers dienendes Wasserverteilungssystem angeordnet.

In dem horizontal im Filterunterteil 4 eingebauten flachen Filterdüsenboden 1 sind über den gesamten Filterquerschnitt düsenförmige Öffnungen 5 als Schlitze ausgebildet, die eine gleichmäßige vertikale Strömungsrichtung 2 des Rückspülwassers in Richtung des direkt auf dem Flachdüsenboden liegenden Filtermaterials 3 realisieren. Die Summe der einzelnen düsenförmigen Öffnungen 5 des Flachdüsenbodens 1 entspricht dem freien Anschlussrohr-Querschnitt 6 des Filters. Der Zwischenraum zwischen den einzelnen düsenförmigen Öffnungen ist so klein bemessen, dass alle Bereiche des darüber liegenden Filtermaterials 3 gleichmäßig durchmischt und aufgewirbelt werden können. Die Gesamtfläche des flachen Filterdüsenbodens 1 entspricht maximal dem 25 fachen der freien Querschnittsfläche des Anschlussrohrleitungsdurchmessers 6 am Filter. Die Stärke bzw. Höhe des Flachdüsenbodens 1 beträgt nur zwischen 0.01 -10 mm.

Die düsenförmigen Öffnungen 5 des flachen Filterdüsenbodens 1 sind so bemessen, dass das kleinste Filtermaterialkom des Filtermaterials 3 nicht während des Filtervorganges aus dem Filter ausgetragen werden.

Eine vertikale Strömungsrichtung 2 des Rückspülwassers in Richtung des Filtermaterials 3 wird vorteilhaft durch die Ausrichtung der düsenförmigen Öffnungen 5 des flachen Filterdüsenbodens 1 realisiert.

Der vollflächig geschlitzte Flachdüsenboden 1 wird vom Filterunterteil 4 aus mit einem speziellen Verteilersystem in Form einer speziell ausgebildeten Verteilerplatte 9 so mit Wasser angeströmt, dass alle düsenförmigen Öffnungen 5 gleichmäßig mit Rückspülwasser vertikal durchflutet werden.

Im Filteroberteil 7 des Filtergehäuses 8 ist ebenfalls für die gleichmäßige Verteilung des Einströmwassers vertikal in den Filter ebenfalls ein horizontal liegendes geeignetes Verteilersystem in Form einer Verteilerplatte 9 angeordnet, welches gewährleistet, dass das Filterwasser gleichmäßig vertikal durch das Filtermaterial geleitet wird, ohne dass es zu Aufwirbelungen des Filtermaterials 3 kommt und dass das Ausströmen des Rückspülwassers zum Auslass-Stutzen im Filteroberteil 7 hin geleitet wird.

Die geometrische Ausführung des Wasserverteilersystems 9 so gestaltet ist, dass die Anschlüsse 6 des Filters horizontal als auch vertikal am Filterunterteil 4 und am Filteroberteil 7 oder am Filtermantel 10 angeordnet sein können und in jedem Fall eine optimale vertikale Strömung des Einström- und Austrittswassers im Filter 8 gewährleistet ist.

Der flache Filterdüsenboden 1 ist durch die Anordnung zwischen zwei Abstützelementen 11 stabilisiert. Die Abstützungselemente 11 sind so nach unten und/oder oben im Filterbehälter 8 angeordnet, dass sie keine strömungstechnische Störquelle im Filter 8 ergeben.

Die lose liegende Filtermaterialschütthöhe im Filter 8 entspricht maximal 50 % der freien Zylinderhöhe des Filterraumes zwischen dem flachen Filterdüsenboden 1 im Filterunterteil 4 und dem oberen Filteranschlussstutzen 6 im Filteroberteil 7.

Der Filter 8 besteht aus insgesamt drei leicht montier- und demontierbaren Hauptbaugruppen, die das Filtergehäuse 8 ergeben. Und zwar aus einem Filterunterteil 4 , einem Filtermantel 10 und einem Filteroberteil 7. Alle drei Baugruppen sind mit entsprechenden Verbindungselementen 12 und Dichtungselementen 13 druckfest und dicht zusammengefügt.

Der Filtermantel 10 besteht aus einem druckfesten transparenten Glas- oder Kunststoffrohr oder ist mit einem vertikal über die gesamte Höhe des Filtermantels 3 angeordneten Schauglas 14 ausgestattet, durch welches eine gute Beobachtung des gesamten Filterinhaltes ermöglicht wird.

Das Filterunterteil 4 und das Filteroberteil 7, der flache Filterdüsenboden 1 sowie die Wasserverteilerelemente 9 , der Filtermantel 10 und alle Einbauteile sind aus druckfestem, gegenüber chemischen und biologischen Wasserzusatzstoffen resistentem Material gefertigt. Alle Bauteile des Flachdüsenboden-Druckfilters sind form- und kraftschlüssig mit einander verbunden sind und leicht montier- und demontierbar sind.

Im Filteroberteil 7 und im Filterunterteil 4 des Flachdüsenboden-Druckfilters sind leicht zu öffnende und zu schließende Öffnungen 15 angebracht sind, durch welche eine einfache Zugabe und Entnahme von Filtermaterial 3 und anderen Filterinhaltsstoffen möglich ist. Am Filtergehäuse 8 ist eine Druckmessung in Form von Druckmanometern oder elektrischen Druckmessgebern möglich, die Aufschlüsse über den Innendruck im Filter 8 geben und über deren Auswertung ein handgesteuerter oder ein elektrisch gesteuerter Wechsel zwischen Filtrations- und Rückspülprozess abgeleitet werden kann.

### Bezugszeichenliste

- 1: Flachdüsenboden
- 2: vertikale Strömungsrichtung
- 3: Filtermaterial
- 4: Filterunterteil
- 5: düsenförmige Öffnungen des Flachdüsenbodens
- 6: Filteranschlussstutzen
- 7: Filteroberteil
- 8: Filtergehäuse, Filterbehälter
- 9: Wasserverteilerelemente (Verteilerplatte)
- 10: Filtermantel
- 11: Abstützelemente
- 12: Verbindungselemente
- 13: Dichtungselemente
- 14: Schauglas
- 15: Öffnungen

## Patentansprüche

1. Druckfilter für Wasserbehandlungs- und Aufbereitungsanlagen,
mit einem Filterunterteil (4) mit einem Anschlußrohr (6), einem Filteroberteil (7) und einem dazwischen angeordneten Filterbehälter (10) zur Aufnahme von Filtermaterial (3) und mit Zu- und Abläufen für das zu reinigende und das gereinigte Wasser,
mit einem horizontal in dem Filterunterteil (4) eingebauten flachen Filterdüsenboden (1), auf dem im befüllten Zustand das Filtermaterial (3) direkt aufliegt, wobei der Filterdüsenboden (1) als ebenes Schlitzblech ausgeführt ist, in dem vollflächig und über den gesamten Filterquerschnitt düsenförmige Öffnungen (5) in Form von Schlitzen angeordnet sind, welche Öffnungen (5) derart ausgerichtet sind, daß bei einem Rückspülvorgang das Rückspülwasser vertikal in Richtung des Filtermaterials (3) strömt,
mit einem unterhalb des Filterdüsenbodens (1) angeordneten, für die Zuführung des Rückspülwassers dienenden Wasserverteilungssystem (9), das bei einem Rückspülvorgang den Filterdüsenboden (1) derart mit Rückspülwasser anströmt, daß alle Öffnungen (5) gleichmäßig mit Rückspülwasser vertikal durchflutet werden, wobei die Summe der einzelnen Öffnungen (5) der freien Anschlußrohrquerschnittsfläche des Filters entspricht und die Gesamtfläche des Filterdüsenbodens (1) maximal dem 25-fachen der freien Anschlußrohrquerschnittsfläche des Filters entspricht.

2. Verfahren zum Rückspülen eines Druckfilters für Wasserbehandlungs- und Aufbereitungsanlagen, welcher Druckfilter ein Filterunterteil (4), ein Filteroberteil (7) und ein dazwischen angeordneten Filterbehälter (10) zur Aufnahme von Filtermaterial (3) sowie Zu- und Abläufe für das zu reinigende und das gereinigte Wasser aufweist, in welchem Filterunterteil (4) ein flacher Filterdüsenboden (1) horizontal eingebaut ist, auf dem im befüllten Zustand das Filtermaterial (3) direkt aufliegt, wobei der Filterdüsenboden (1) als ebenes Schlitzblech ausgeführt ist, in dem vollflächig und über den gesamten Filterquerschnitt düsenförmige Öffnungen (5) in Form von Schlitzen angeordnet sind, wobei die Summe der einzelnen Öffnungen (5) der freien Anschlußrohrquerschnittsfläche des Filters entspricht und die Gesamtfläche des Filterdüsenbodens (1) maximal dem 25-fachen der freien Anschlußrohrquerschnittsfläche des Filters entspricht,
bei welchem Verfahren mit Hilfe eines für die Zuführung des Rückspülwassers dienenden Wasserverteilungssystems (9), das unterhalb des Filterdüsenbodens (1) angeordnet ist, der Filterdüsenboden (1) derart mit Rückspülwasser angeströmt wird, daß alle Öffnungen (5) gleichmäßig mit Rückspülwasser vertikal durchflutet werden, wobei die Öffnungen (5) derart ausgerichtet sind, daß bei einem Rückspülvorgang das Rückspülwasser vertikal in Richtung des Filtermaterials (3) strömt.

## Claims

1. Pressure filter for water treatment and processing plants,
having a bottom filter part (4) with a connection pipe (6), having a top filter part (7) and having a filter container (10), arranged between said bottom filter part (4) and said top filter part (7), for receiving filter material (3), and having inflows and outflows for the water to be cleaned and the cleaned water,
having a flat filter nozzle bottom (1) which is installed horizontally in the bottom filter part (4) and on which the filter material (3) rests directly in the filled state, wherein the filter nozzle bottom (1) is embodied as a planar slotted sheet plate, in which nozzle-like openings (5) in the form of slots are arranged over the entire surface and over the entire filter cross-sectional area, said openings (5) being oriented such that, during a backwashing operation, the backwash water flows vertically in the direction of the filter material (3),
having a water distribution system (9) which is arranged below the filter nozzle bottom (1) and serves for feeding the backwash water, said water distribution system (9) causing backwash water to flow against the filter nozzle bottom (1) during a backwashing operation, such that all the openings (5) are uniformly flushed vertically with backwash water, wherein the sum of the individual openings (5) corresponds to the free connection-pipe cross-sectional area of the filter, and the overall surface area of the filter nozzle bottom (1) corresponds at most to 25 times the free connection-pipe cross-sectional area of the filter.

2. Method for backwashing a pressure filter for water treatment and processing plants, said pressure filter having a bottom filter part (4), a top filter part (7) and a filter container (10), arranged between said bottom filter part (4) and said top filter part (7), for receiving filter material (3), and inflows and outflows for the water to be cleaned and the cleaned water, a flat filter nozzle bottom (1) being installed horizontally in said bottom filter part (4), and the filter material (3) resting directly on said filter nozzle bottom (1) in the filled state, wherein the filter nozzle bottom (1) is embodied as a planar slotted sheet plate, in which nozzle-like openings (5) in the form of slots are arranged over the entire surface and over the entire filter cross-sectional area, wherein the sum of the individual openings (5) corresponds to the free connection-pipe cross-sectional area of the filter, and the overall surface area of the filter nozzle bottom (1) corresponds at most to 25 times the free connection-pipe cross-sectional area of the filter,
in which method, with the aid of a water distribution system (9) that serves for feeding the backwash water and is arranged beneath the filter nozzle bottom (1), backwash water flows against the filter nozzle bottom (1) such that all the openings (5) are uniformly flushed vertically with backwash water, wherein the openings (5) are oriented such that, during a backwashing operation, the backwash water flows vertically in the direction of the filter material (3).

## Revendications

1. Filtre à pression pour installations de préparation et de traitement d'eau,
comprenant une partie inférieure de filtre (4) avec un tube de raccordement (6), une partie supérieure de filtre (7) et un récipient de filtre (10) disposé entre elles pour recevoir un matériau filtrant (3) et avec des alimentations et des sorties pour l'eau à purifier et pour l'eau purifiée,
comprenant un fond de buse de filtration plat (1) incorporé horizontalement dans la partie inférieure de filtre (4), sur lequel repose directement le matériau filtrant (3) dans l'état rempli, le fond de buse de filtration (1) étant réalisé sous forme de tôle fendue plane dans laquelle sont disposées sur toute la surface et sur toute la section transversale du filtre des ouvertures formant buse (5) en forme de fentes, lesquelles ouvertures (5) sont orientées de telle sorte que lors d'une opération de rinçage à contre-courant, l'eau de rinçage à contre-courant s'écoule verticalement dans la direction du matériau filtrant (3),
comprenant un système de distribution d'eau (9) disposé en dessous du fond de buse de filtration (1) servant à l'alimentation en eau de rinçage à contre-courant, lequel, lors d'une opération de rinçage à contre-courant, injecte de l'eau de rinçage à contre-courant sur le fond de buse de filtration (1) de telle sorte que toutes les ouvertures (5) soient parcourues par l'écoulement verticalement de manière uniforme avec de l'eau de rinçage à contre-courant, la somme des ouvertures individuelles (5) correspondant à la surface en section transversale libre du tube de raccordement du filtre et la surface totale du fond de buse de filtration (1) correspondant au maximum à 25 fois la surface en section transversale libre du tube de raccordement du filtre.

2. Procédé de rinçage à contre-courant d'un filtre à pression pour installations de préparation et de traitement d'eau, lequel filtre à pression présente une partie inférieure de filtre (4), une partie supérieure de filtre (7) et un récipient de filtre (10) disposé entre elles pour recevoir un matériau filtrant (3) et avec des alimentations et des sorties pour l'eau à purifier et pour l'eau purifiée, dans laquelle partie inférieure de filtre (4) est incorporé horizontalement un fond de buse de filtration plat (1) sur lequel repose directement le matériau filtrant (3) dans l'état rempli, le fond de buse de filtration (1) étant réalisé sous forme de tôle fendue plane dans laquelle sont disposées sur toute la surface et sur toute la section transversale du filtre des ouvertures formant buse (5) en forme de fentes, la somme des ouvertures individuelles (5) correspondant à la surface en section transversale libre du tube de raccordement du filtre et la surface totale du fond de buse de filtration (1) correspondant au maximum à 25 fois la surface en section transversale libre du tube de raccordement du filtre,
dans lequel procédé, à l'aide d'un système de distribution d'eau (9) servant à l'alimentation en eau de rinçage à contre-courant, qui est disposé en dessous du fond de buse de filtration (1), le fond de buse de filtration (1) est sollicité avec de l'eau de rinçage à contre-courant de telle sorte que toutes les ouvertures (5) soient parcourues par l'écoulement verticalement de manière uniforme avec de l'eau de rinçage à contre-courant, les ouvertures (5) étant orientées de telle sorte que lors d'une opération de rinçage à contre-courant, l'eau de rinçage à contre-courant s'écoule verticalement dans la direction du matériau filtrant (3).
